# EUROPÄISCHE PATENTANMELDUNG

(11) **EP 0 786 847 A2**
(43) Veröffentlichungstag der Anmeldung: **30.07.1997**
(21) Anmeldenummer: 97101144.0
(22) Anmeldetag: 24.01.1997
(51) Int. Cl.: H02H 5/04

(54) **Brandschützschalter**

(30) Priorität: 25.01.1996 DE 19602631
(71) Anmelder: Lauerer, Friedrich, D-82152 Krailling (DE)
(72) Erfinder: Lauerer, Friedrich, D-82152 Krailling (DE)

(57) **Zusammenfassung**

Gegenstand der Erfindung ist ein Schutzschalter gegen Brände, die von Elektrogeräten, insbesondere von Fernsehgeräten verursacht werden können.

## Beschreibung

Gegenstand der Erfindung ist ein Schutzschalter gegen Brände, die von Elektrogeräten, insbesondere von Fernsehgeräten verursacht werden können.

Die Erfindung löst die gestellte Aufgabe durch die Merkmale gemäß Anspruch 1. Der folgende Unteranspruch enthält eine vorteilhafte Weiterbildung der Erfindung.

In der Zeichnung sind Ausführungsbeispiele der Erfindung wiedergegeben, welche die Verwendung speziell als "Brandschutzschalter" für Fernsehgeräte betreffen. Prinzipiell kann die Erfindung auch für andere Anwendungen, d.h. mit Hilfe andersartiger Sensoren verwendet werden.

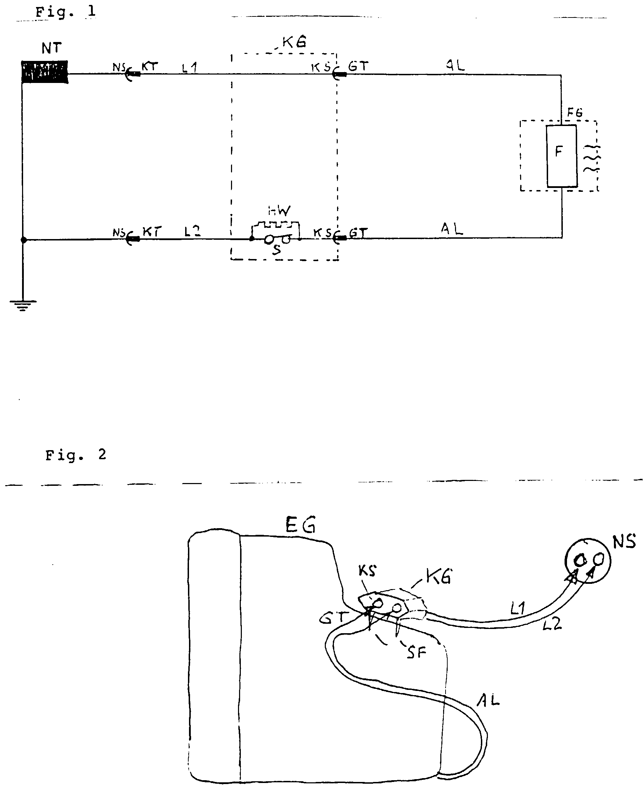

In Fig. 1 ist ein Elektrogerät EG, z.B. ein Fernsehgerät mit seinem Gerätestecker GT an dem erfindungsgemäßen Kupplungsgerät KG, genau an der daran befindlichen Kupplungssteckdose KS angeschlossen. Die Steckerstifte KT der ortsveränderlichen Kupplungssteckdosenleitung (L1 und L2) sind über die NetzSteckdose NS mit dem Netztransformator NT des öffentlichen Versorgungsnetzes verbunden. Im Kupplungsgerät KG ist innerhalb einer Leitung ein Temperaturwächter S dazwischen geschaltet. Wenn die vom Elektrogerät EG abgeführte Wärme eine zu hohe Temperatur zur Folge hat, dann schaltet der im Wärmestrom liegende Temperaturwächter S die Zufuhr des Betriebsstromes aus. Die Folge ist, daß sich das Elektrogerät nicht mehr weiter aufheizen kann und ein möglicher Brand verhindert wird.

Parallel zum Temperaturwächter S liegt ein Heizwiderstand mit relativ hohem Widerstand. Dieser hat die Aufgabe, den Tempera-turwächter S weiterhin aufzuheizen, damit dieser nicht wieder einschalten kann. Eine Wiedereinschaltung ist aus Sicherheitsgründen daher nur dann möglich, wenn sich das Elektrogerät genügend abgekühlt hat und zusätzlich das Elektrogerät von Hand eine bestimmte Zeit ausgeschaltet wurde.

In Fig. 2 ist die Anordnung des erfindungsgemäßen Brandschutz-schalters wiedergegeben. Das Kupplungsgerät KG ist mit seinen Steckfüßen SF bei den Wärmeabluftöffnungen des Elektrogerätes EG, hier ein Fernsehgerät, eingesteckt. Die am Kupplungsgerät KG angeschlossene Leitung L1; L2 ist an der Netz-Steckdose NS angeschlossen. Die Anschlußleitung AL des Fernsehgerätes EG ist mit seinen Stecker GT an der Steckdose KS des Kupplungsgerätes KG angeschlossen.
Erhöht sich die Temperatur an den Wärmeabluftöffnungen des Fernsehgerätes EG über den vorgesehenen Sollwert, dann schaltet der im Wärmeluftstrom befindliche Temperaturwächter ab und ein möglicher Brand wird auf diese Weise verhindert.

## Patentansprüche

1. Brandschutzschalter, bestehend aus einer ortsveränderlichen Geräteleitung mit Stecker (KT), Leitung (L1; L2) und Kupplungssteckdose (KS), dadurch gekennzeichnet, daß
- die Kupplungssteckdose (KS) einen Sensor (S) enthält, der dann eine Abschaltung des an der Kupplungssteckdose (KS) angeschlossenen Elektrogerätes (EG) bewirkt, wenn eine vom Inneren des Elektrogerätes (EG) ausgehende physikalische Größe vom vorgesehenen Sollwert abweicht,
- dieser Sensor auf Temperatur, Rauch, Flüssigkeit, Druck oder andere physikalische bzw, chemische Größen anspricht,
- die Kupplungssteckdose (KS) mit mindestens einem Fuß versehen ist, der in eine Öffnung, insbesondere in eine Wärme-Abluftöffnung des Elektrogerätes (EG) mechanisch fest eingesteckt werden kann.

2. Brandschutzschalter nach Anspruch 1, dadurch gekennzeichnet, daß als Sensor (S) ein temperaturabhängiger Schalter (Temperaturwächter) verwendet wird, zu dessen Schaltkontakt ein Heizwiderstand (HW) oder ein Kaltleiter parallel geschaltet ist.
